Europäisches Patentamt

European Patent Office

Office européen des brevets

(19)

(11) Veröffentlichungsnummer: **0 180 661**
**B1**

(12) **EUROPÄISCHE PATENTSCHRIFT**

(45) Veröffentlichungstag der Patentschrift: 23.05.90

(21) Anmeldenummer: 84113457.0

(22) Anmeldetag: 08.11.84

(51) Int. Cl.⁵: **H 04 N 5/44**

(54) **Fernsehempfänger mit flimmerfreier Wiedergabe eines Zwischenzeilen-Videosignals.**

(43) Veröffentlichungstag der Anmeldung:
**14.05.86 Patentblatt 86/20**

(45) Bekanntmachung des Hinweises auf die
Patenterteilung:
**23.05.90 Patentblatt 90/21**

(84) Benannte Vertragsstaaten:
**DE FR GB IT NL**

(56) Entgegenhaltungen:
**EP-A-0 070 465**

**FERNSEH- UND KINO-TECHNIK, 38. Jahrgang,
Nr. 6, Juni 1984, Seiten 231-238, Berlin, DE; H.
SCHÖNFELDER: "Verbesserung der PAL-
Bildqualität durch digitale Interframetechnik"**

(73) Patentinhaber: **Deutsche ITT Industries GmbH
Hans-Bunte-Strasse 19 Postfach 840
D-7800 Freiburg (DE)**

(72) Erfinder: **Mehrgardt, Sönke, Dr.
Häglestrasse 26
D-7801 March-Neuershausen (DE)**

Courier Press, Leamington Spa, England.

**Beschreibung**

Die Erfindung betrifft einen Fernsehempfänger, der ein nach einem Zwischenzeilenverfahren aufbereitetes, Halbbilder enthaltendes Videosignal nach Analog-Digital-Wandlung, digitaler Signalverarbeitung und Digital-Analog-Wandlung flimmerfrei wiedergibt, mit digitalen Speichern für das digitale Videosignal, einem digitalen Bewegungsdetektor und einem digitalen Halbbild-Interpolator, an dessen Ausgang das digitale flimmerfreie Videosignal auftritt, vgl. den jeweiligen Oberbegriff der Ansprüche 1 bis 3.

Die Bildqualität von derzeit erhältlichen Fernsehempfängern ist inzwischen so gut, daß eine weitere Verbesserung aufgrund der prinzipiellen Eigenschaften der derzeit üblichen Fernsehsysteme nicht mehr möglich ist. Der Hauptgrund dafür liegt im System des Zwischenzeilenverfahrens, bei dem jedes Fernsehbild in zwei Halbbilder unterteilt wird, die mit 50-Hz- bzw. 60-Hz-Halbbildfrequenz übertragen werden. Daraus resultieren bekanntlich zwei prinzipielle Störungen, nämlich einmal, daß große Flächen mit der Halbbildfrequenz flimmern, was insbesondere bei den europäischen 50-Hz-Systemen sehr störend wahrzunehmen ist, und zum anderen daß an waagerechten Bildkanten des sogenannte Kantenflackern mit der Vollbildfrequenz von 25 Hz bzw. 30 Hz auftritt. Dieser zweite Effekt ist nicht nur besondere störend, insbesondere bei eingeblendeter Schrift, sondern durch ihn wird auch die subjektive Bildzuflösung vermindert, da feine Strukturen unruhig zu tanzen scheinen und schlecht erkennbar sind.

Eine völlige Beseitigung der Flimmerstörungen setzt die Erhöhung der Bildfrequenz über die Empfindlichkeitsgrenze des Auges von ca 70 Hz voraus. Das erfordert aber Bildspeicher im Fernsehempfänger. Um alle Flimmerstörungen beseitigen zu können, muß zwischen verschiedenen Methoden der Bildfrequenzerhöhung umgeschaltet werden, je nachdem ob bewegte oder unbewegte Bildzeilen vorliegen, vol. G. Drechsler, "Tagungsband der 11, Jahrestagung der FKTG", Juni 1984, Seiten 558 bis 578.

Im einzelnen gilt hierbei folgendes, wobei zur Veranschaulichung drei aufeinanderfolgende Vollbilder A, B, C betrachtet werden, die beim Zwischenzeilenverfahren in je zwei Halbbilder A1, A2; B1, B2; C1, C2 unterteilt sind und in dieser Reihenfolge gesendet und empfangen werden. Eine Möglichkeit der flimmerfreien Wiedergabe besteht darin, jedes Halbbildpaar zweimal darzustellen, so daß Vollbild A auf den Bildschirm durch die vier Halbbilder in der Reihenfolge A1, A2, A1, A2 gebildet wird, die mit doppelter Halbbildfrequenz wiedergegeben werden. Diese Verdoppelung unterdrückt das Großflächenflimmern völlig und das Kantenflimmern weitgehend.

Allerdings gibt es bei bewegten Bildvorlagen Schwierigkeiten, da nach der im zweiten Halbbild A2 enthaltenen späteren Bewegungsphase wieder die frühere Phase des Halbbildes A1 erscheint, was zu unangenehm springenden und ausgezackten Bewegungsdarstellungen führt. Ist somit Bewegung vorhanden, muß auf die Halbbilfolge A1, A1, A2, A2 umgeschaltet werden, was bedeutet, daß die Halbbildet direkt aufeinanderfolgend verdoppelt werden.

Die Umschaltung zwischen diesen beiden Wiedergabemöglichkeiten erfolgt mittels des erwähnten Bewegungsdetektors von Bildpunkt zu Bildpunkt, der anhand der Differenz zwischen dem letzten Bild und der neu eingehenden Bildinformation der Bewegungsgrad ermittelt. Für die Bewegungsdetektion muß also gerade die um ein Vollbild verzögerte Information aus dem Bildspeicher verfügbar sein. Da in der Praxis ein Umschalten von der einen auf die andere Halbbildfolge zu weiteren erheblichen Bildstörungen führt, ist es aus der genannten Literaturstelle bekannt, je nach Bewegungsgrad von der einen auf die andere Halbbildfolge gleitend umzublenden.

Eine derartige Schaltungseinrichtung enthält beispielsweise nach der genannten Literaturstelle (G. Drechsler, "Tagungsband der 11. Jahrestagung der FKTG") Speichereinrichtungen für Bildsignale, die diese mittels zweier hintereinander geschalteter Halbbildspeicher für die Dauer eines Halbbildes und eines Vollbildes verzögern und das Ausgangssignal des Vollbildspeichers für die Halbbildinterpolation nochmals zusätzlich um zwei Bildzeilen verzögert. Das direkte und das um zwei Zeilen verzögerte Ausgangssignal des Vollbildspeichers werden mittels eines Addierers addiert und die Summe wird dann über den Bewertungsfaktor 0,5 halbiert. Dieser aus dem einen Halbbild berechnete Wert bildet somit die linear interpolierten Zwischenzeilen des um eine Vollbilddauer verzögerten einen Halbbildes und hat vor allem die gleiche Rasterlage wis das nur um eine Halbbilddauer verzögerte andere Halbbild.

Diese beiden rastergleichen Halbbilder werden über die Bewertungsfaktoren "alpha" und "1-alpha" mittels eines Addierers zusammengefaßt, wobei der zwischen 0 und 1 liegende Koeffizient alpha über den Bewegungsdetektor in Abhängigkeit von der festgestellten Bewegung gesteuert wird. Je nach dem Wert von alpha kann somit die anteilmäßige Zusammensetzung des mit erhöhter Wiedergabefrequenz darzustellenden Vollbildes aus diesen beiden rastergleichen Halbbildern bestimmt werden, wobei das wiedergegebene Vollbild an Orten mit keiner Bewegung aus zwei aufeinanderfolgenden Halbbildern, an Orten mit starker Bewegung aus einem einzigen Halbbild mit interpolierten Zwischenzeilen und an Orten mit mittlerer Bewegung aus einer unterschiedlich gewichteten Kombination des einen interpolierten Halbbildes mit dem darauffolgenden anderen Halbbild besteht. Dies ermöglicht auch den gleitenden Übergang von der einen Halbbildfolge auf die andere.

Das eben geschilderte Wiedergabeverfahren arbeitet, wie bereits erwähnt, mit doppelter Halbbildfrequenz. Da damit Sekundäreffekte, z.B. das bekannten Zeilenwandern, noch nicht eliminiert werden können, ist in der genannten Literaturstelle ferner kurz angedeutet, die Halbbildpaare zu Vollbildern zusammenzufassen und ausreichend schnell wiederzugeben. Über die erforderliche Anzahl der Speicherhierfür macht die genannte Literaturstelle jedoch keine Aussagen.

Andererseits ist in der Offenlegungsschrift DE 32 03 978 A1 ebenfalls eine Anordnung mit Halbbildfrequenz-Verdoppelung beschrieben, die mit drei Halbbildspeichern arbeitet. Diese sind untereinander durch eine geeignete Anordnung von Vielfachumschaltern verbunden. In zwei Halbbildspeichern wird das empfangene digitale Videosignal wechselweise eingeschrieben. Solange in den ersten Halbbildspeicher mit einfacher Halbbildfrequenz geschrieben wird, steht das im zweiten Halbbildspeicher bereits vorhandene vorausgehande Halbbild zum doppelt schnellen Auslesen zur Verfügung. Mittels des dritten Halbbildspeichers wird eine weitere Signalverzögerung erzeugt, so daß bei geeignetem Betätigen der Umschalter an den Ausgängen der drei Halbbildspeicher jeweils ein Paar aufeinanderfolgender Halbbilder zur Verfügung steht. Theoretisch läßt sich mit diesem System sowohl eine doppelt schnelle Halbbildwiedergabe als auch eine entsprechende Vollbildwiedergabe erreichen.

Wie Untersuchungen gezeigt haben, gibt es bei der praktischen Realisierung dieser Anordnung erhabliche Schwierigkeiten. So muß z.B. der dritte Halbbildspeicher in bestimmten Phasen des Auslesens mit doppelbar Geschwindigkeit simultan gelesen und geschrieben werden, so daß er mit dem Vierfachen der eingehenden Datenrate belastet ist.

In EP—A—0 070 465 ist ein Verfahren und eine Schaltungsanordnung zur Erhöhung der Bildwiedergabefrequenz beschrieben, wobei zur Bildspeicherung lediglich ein einziger Vollbildspeicher erforderlich ist. Das Ein- und das Auslesen der verschiedenen Datensätze erfolgt mittels ineinandergeschachtelter Ein- und Auslesezyklen derart, daß die Zeit zwischen dem Auftreten eines ersten einzuschreibenden Datensatzes und dem Auftreten des folgenden Datensatzes in zwei Zeitabschnitte aufgeteilt ist. Im ersten wird ein Datensatz mit erhöhter Frequenz eingeschrieben und im zweiten Zeitabschnitt werden dann k Datensätze mit erhöhter Frequenz ausgelesen. Bei dem beschriebenen Verfahren findet jedoch keine Bewegungserkennung statt, die zusätzlich zu den beschriebenen Datenbewegungen das Auslesen der exakt um eine Vollbildauer verzögerte Bildinformation erfordert, um die verzögerten Bilddaten mit den neu eingehenden Bilddaten zu vergleichen und dann die Bilddaten, die evtl. auch noch modifiziert sind, wieder in den Speicher zurückzuschreiben, bevor die Auslesung für die eigentliche Bildwiedergabe mit erhöhter Frequenz erfolgt.

Der in den Ansprüchen gekennzeichneten Erfindung liegt somit die Aufgabe zugrunde, für flimmerfreie Wiedergabe von Videosignalen eine einfachere Speicheranordnung zu finden und ferner die zu deren Steuerung erforderliche Ablaufsteuerschaltung so zu konzipieren, daß sie mittels einer einzigen integrierten Schaltung zu realisieren ist, deren Kristallfläche maximal die heute in der Massenfertigung beherrschbare Größe aufweist (30 bis 50 mm$^2$). Der Erfindung liegt bei der Lösung dieser Aufgabe die Erkenntnis zugrunde, daß mit einem einzigen Vollbildspeicher, der geschickt organisiert ist, auch eine flimmerfreie Vollbildwiedergabe im oben angegebenen Sinne möglich ist. Gegenüber der Anordnung nach der genannten Offenlegungsschrift ergibt sich somit der wesentliche Vorteil, daß ein Halbbildspeicher weniger erforderlich ist. Weitere Vorteile ergeben sich aus der weiteren Beschreibung.

Die Erfindung wird nun anhand der Figuren der Zeichnung näher erläutert.

Fig. 1 zeigt schematisch die Anordnung der Zeilen beim Zwischenzeilenverfahren,

Fig. 2 zeigt schematisch ein Zuordnungsschema der in Fig. 1 gezeigten Zeilen im Vollbildspeicher der Erfindung,

Fig. 3 zeigt das Blockschaltbild eines Ausführungsbeispiels der erfindungswesentlichen Teilschaltungen,

Fig. 4 zeigt ein der Fig. 2 entsprechendes Zuordnungsschema für eine erste Lösungsvariante der Erfindung,

Fig. 5 zeigt ein weiteres Zuordnungsschema für eine zweite Lösungsvariante der Erfindung, und

Fig. 6 zeigt schließlich ein Zuordnungsschema für eine dritte Lösungsvariante der Erfindung.

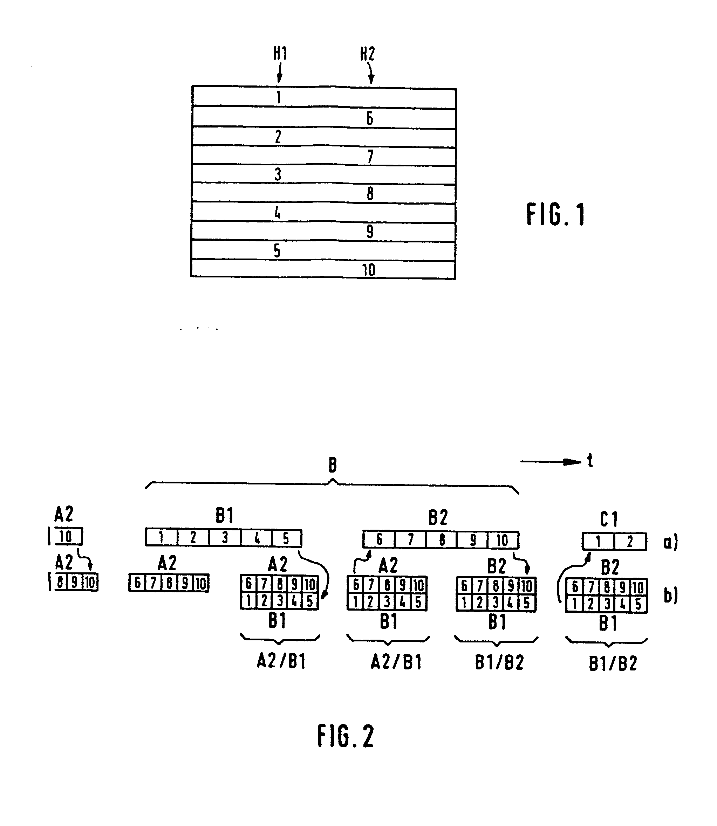

Zur Vereinfachung der Erläuterung der Erfindung anhand der Figuren ist entsprechend Fig. 1 vorausgesetzt, daß jedes Halbbild H1, H2 des gesendeten und empfangenen Fernsehbildes aus je 5 Zeilen besteht, die abwechselnd ineinander geschachtelt sind. Somit sind die Zeilen 1...5 des Halbbildes H1 mit der Zeilen 6...10 des zweiten Halbbildes H2 derart verschachtelt, daß die Zeilenfolge 1, 6; 2, 7;...5, 10 entsteht.

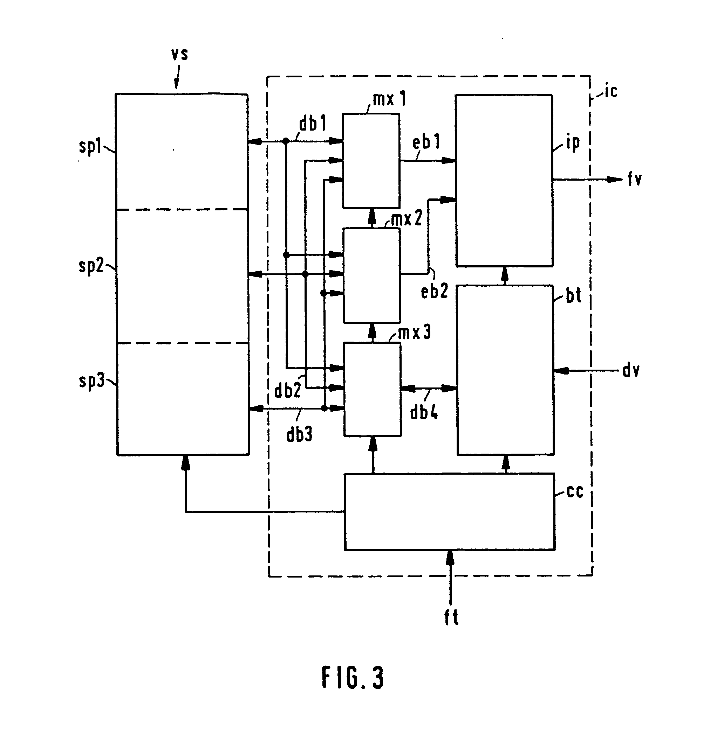

In Fig. 2 ist schematisch ein Zuordnungsschema für das Einschreiben und das doppelt schnelle Auslesen in den bzw. aus dem bei der Erfindung vorgesehenen Vollbildspeicher vs (Fig. 3) gezeigt. Das Zuordnungsschema ist, wie durch den Pfeil t angedeutet ist, zeitlich zu verstehen, d.h. es zeigt, wie die einzelnen Zeilen zeitlich hintereinander in den Vollbildspeicher vs eingeschrieben und aus ihm wieder ausgelesen werden. Fig. 2a zeigt das "langsame" (zeilenfrequente) Einschreiben der Halbbilder B1 und B2 des Vollbildes B. Dabei kann der um die Dauer eines Vollbildes verzögerte Bildpunkt zuerst ausgelesen und dann durch den neuen Bildpunkt zuzüglich der Bewegungsinformation wieder eingeschrieben werden. In Fig. 2b ist das doppelt so schnelle Auslesen der aufeinanderfolgenden Halbbildpaare A2/B1, A2/B1, B1/B2, B1/B2 gezeigt, woraus sich ergibt, daß jedes dieser Halbbildpaare zweimal ausgelesen werden kann, so daß eine 100-Hz-Vollbildwiedergabe möglich ist. Die beim Auslesen kritischen Stellen sind durch die gekrümmten Pfeile markiert; es sind dies die Stellen mit den nach unten weisenden Pfeilen an den Zeilen 5 und 10, die eingeschrieben sein müssen, bevor sie ausgelesen werden können, und die nach oben weisenden Pfeile an den Zeilen 1 und 6, die erste überschrieben werden dürfen, nachdem sie ausgelesen worden sind.

Die Zwischenräume zwischen den einzelnen Halbbildern entsprechen den Zeilen des Bildwechsels, die nicht im Bildspeicher abgelegt zu werden brauchen. Die für das Einschreiben in Fig. 2a erforderliche Zeitdauer bzw. die in Fig. 2b für das Auslesen erforderliche zeigt, daß zum Einschreiben gerade doppelt so viel Zeit zur Verfügung steht wie zum Auslesen. Deshalb ist beim Einschreiben das für den Bewegungsdetektor bt (Fig. 3) nötige Auslesen im Zeitmultiplex möglich, ohne die beim doppelt schnellen Auslesen ohnehin nötige Datenübertragungsrate zu überschreiten.

Fig. 3 zeigt das Blockschaltbild einer Ausführungsform der Erfindung. Der Vollbildspeicher vs besteht aus den drei Speicherbezirken sp1, sp2, sp3, deren jedem der erste bzw. zweite bzw. dritte Multiplexer mx1, mx2, mx3 zugeordnet ist. Jeder Speicherbezirk ist nämlich mit jedem Multiplexer über den ersten bzw. zweiten bzw. dritten Zweirichtungs-Datenbus db1, db2, db3 verbunden, wobei der Datentransfer auf diesen Bussen (datenblockweise) nur in einer Richtung erfolgt, d.h., obwohl es sich um Zweirichtungs-Datenbusse handelt, erfolgt zu einem bestimmten Zeitpunkt nie ein Datenfluß in beide Richtungen, sondern nur in eine.

Der erste bzw. zweite Multiplexer mx1, mx2 liegt ferner über den ersten bzw. zweiten Ein-Richtungs-Datenbus eb1, eb2 am ersten bzw. zweiten Eingang des Halbbild-Interpolators ip. Die beiden Multiplexer mx1, mx2 sind daher bevorzugt Ein-Richtungs-Multiplexer, während der Multiplexer mx3 in zwei Richtungen Daten übertragen muß und deshalb über den vierten Zwei-Richtungs-Datenbus db4 mit dem Bewegungsdetektor bt verbunden ist, an dessen Eingang das digitale Videosignal dv liegt, während am Ausgang des Halbbild-Interpolators ip das digitale flimmerfreie Videosignal fv auftritt.

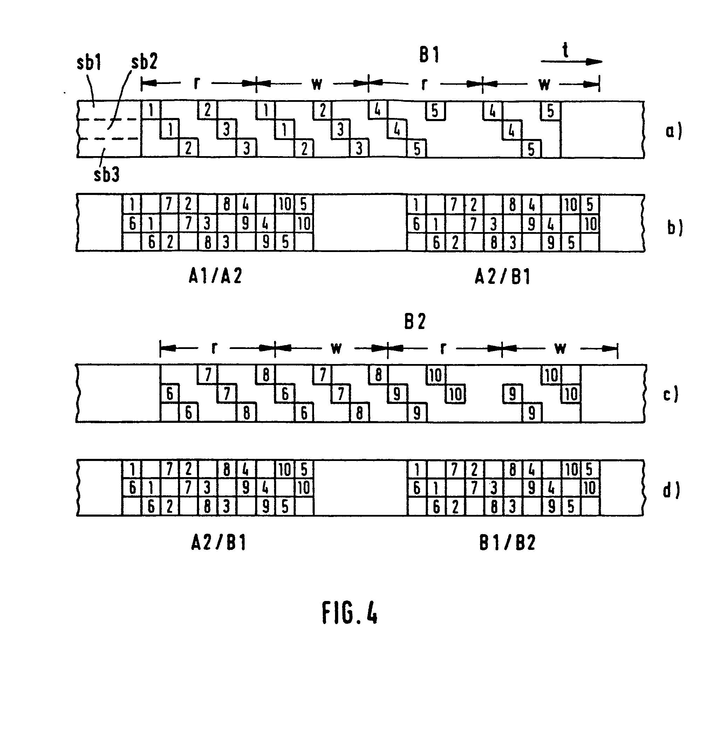

Die an einem nicht gezeigten Taktoszillator betriebene Ablaufsteuerschaltung cc, der unter anderem das hier benötigte Taktsignal ft und im übringen weitere Systemtaktsignale für die einzelnen digitalen Teilschaltungen des Fernsehempfängers erzeugt, steuert das zeilenfrequente Einschreiben und das ein- oder zweimalige Auslesen mit der doppelten Zeilenfrequenz in die bzw. aus den drei Speicherbezirken des Vollbildspeichers vs. Die Information einer Zeile, die im folgenden kurz als "Datenwort" bezeichnet wird, wird vor dem Einschreiben w auf die halbe Zeilendauer komprimiert, was z.B. in einer entsprechenden Stufe des Bewegungsdetektors bt oder auch in einer eigens dafür vorgesehenen Stufe geschehen kann. Dadurch wird erreicht, daß die noch anhand der Fig. 4 bis 6 zu erläuternde zeitliche Ineinanderschachtelung der einzelnen Datenwörter in den drei Speicherbezirken sp1, sp2, sp3 möglich ist.

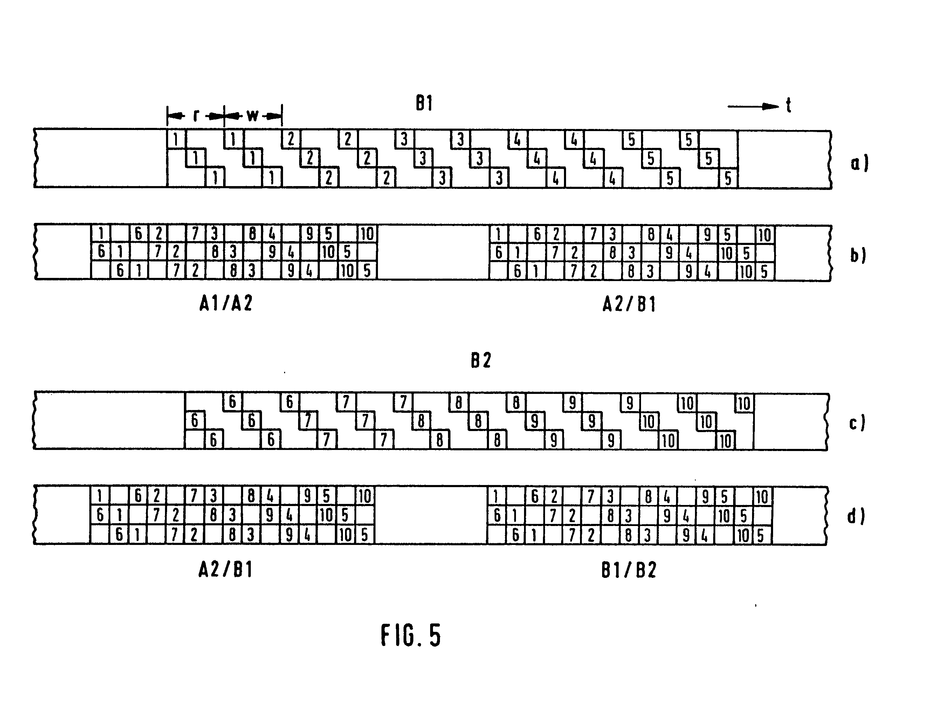

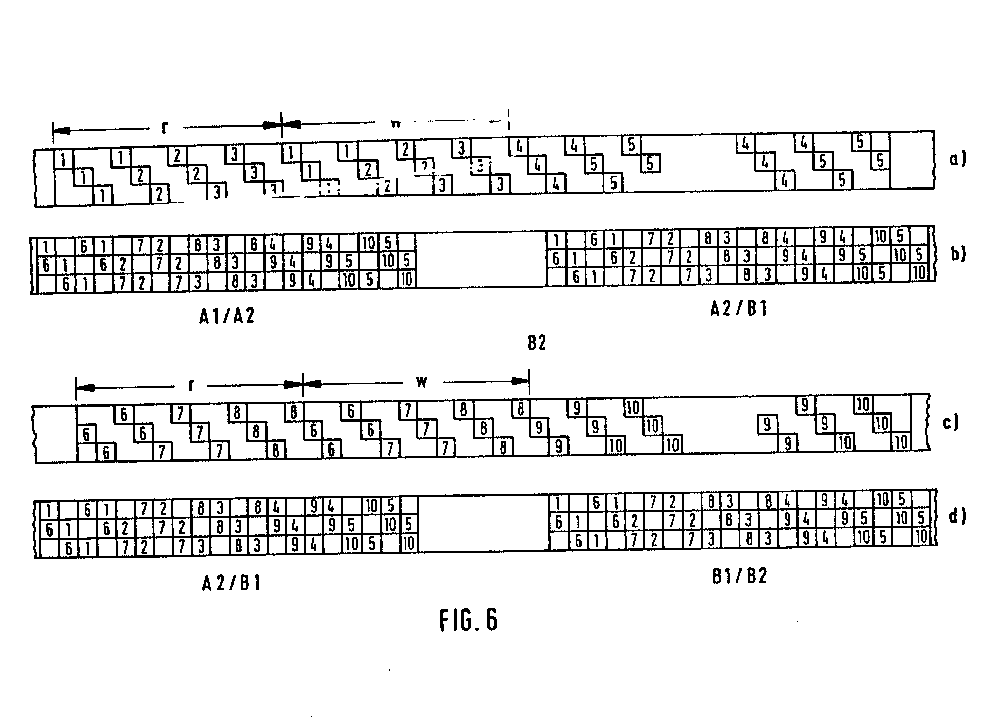

Der Aufbau der Ablaufsteuerschaltung cc ergibt sich für den Fachmann aus der folgenden Funktionsbeschreibung des zeitlichen Ablaufs für das Einschreiben und Auslesen des Vollbildspeichers vs. Bei der ersten Lösungsvariante der Erfindung sind die Datenworte des Halbbildes H1 nach Fig. 1, also die der Zeilen 1...5, in zwei Wortblöcke und die des zweiten Halbbildes H2, also die der Zeilen 6 bis 10, in zwei Wortteile aufgeteilt. Die Fig. 4 zweigt nun wie diese Wortblöcke bzw. Wortteile zeitlich direkt aufeinanderfolgend in den drei Speicherbezirken des Vollbildspeichers vs gespeichert und daraus wieder ausgelesen werden. Zur Veranschaulichung ist daher in Fig. 4 ebenso wie in den Fig. 5 und 6 das zeitliche Zuordnungsschema für die drei Speicherbezirke gezeigt, wobei in jedem der streifenartigen Anordnungen dieser Figuren der obere Teilstreifen dem Speicherbezirk sp1, der mittlere dem Speicherbezirk sp2 und der untere dem Speicherbezirk sp3 zugeordnet ist.

In den Fig. 4, 5 und 6 sind ferner die Blöcke bzw. Teile der Datenwörter der einzelnen Zeilen bezüglich der Bezugszeichen nicht voneinander unterschieden, sondern die zu einer Zeile gehörenden Blöcke bzw. Teile sind mit der Nummer dieser Zeile beziechnet. Entsprechend der Lösungsvariante nach Fig. 4 ist der erste Wortblock einer n-ten Zeile, wobei n eine ganze Zahl der Folge 1, 4, 7,...N/2 und N die Vollbildzeilenzahl oder nur die Zahl der Zeilen mit Bildinformation eines Vollbildes ist, im ersten Speicherbezirk sp1 und deren zweiter Wortblock im zweiten Speicherbezirk sp2, der erste Wortblock einer (n+1)-ten Zeile im dritten Speicherbezirk sp3 und deren zweiter Wortblock im ersten Speicherbezirk sp1 sowie der erste Wortblock einer (n+2)-ten Zeile im zweiten Speicherbezirk und deren zweiter Wortblock im dritten Speicherbezirk gespeichert, was während des Einschreibens w erfolgt. In vergleichbarer Weise wird entsprechend Fig. 4c der erste Wortteil einer m-ten Zeile, wobei m von 1+N/2, 4+N/2, 7+N/2 bis N läuft, im zweiten Speicherbezirk sp2 und deren zweiter Wortteil im dritten Speicherbezirk sp3, der erste Wortteil einer (m+1)-ten Zeile im ersten Speicherbezirk sp1 und deren zweiter Wortteil im zweiten Speicherbezirk sp2 sowie der erste Wortteil einer (m+2)-ten Zeile im dritten Speicherbezirk sp3 und deren zweiter Wortteil im ersten Speicherbezirk sp1 gespeichert. Es ist ersichtlich, daß die Zuordnung der Datenwörter des ersten Halbbildes H1 bezüglich der des zweiten Halbbildes H2 in den einzelnen Speicherbezirken versetzt ist, was ein wesentlicher Lösungsgedanke der Erfindung ist.

Von der neu eingehenden Bildinformation werden in den Fig. 4 und 6 jeweils drei aufeinanderfolgende Zeilen zu einer Dreierfolge zusammengefaßt, z.B. die Zeilen 1, 2, 3 oder die Zeilen 6, 7, 8 nach dem Zeilenschema von Fig. 1. Die Dreierfolge des ersten bzw. des zweiten Halbbildes H1, H2 umfaßt also die Zeilen n, n+1, n+2 bzw. die Zeilen m, m+1, m+2. Die Zeitdauer der jeweils empfangenen Dreierfolge wird in zwei gleiche Zeitintervalle aufgeteilt, wobei die erste Hälfte als Ausleseintervall r und die zweite Halfte als Einschreibintervall w bezeichnet wird.

Während des Ausleseintervalls r wird das um eine Vollbilddauer verzögerte Datenwort der n- bzw. m-ten Zeile aus dem Vollbildspeicher vs ausgelesen (vgl. in den Fig. 4 und 6 das angegebene Ausleseintervall r), mit dem Datenwort der neu eingehenden n- bzw. m-ten Zeile im Bewegungsdetektor bt verglichen und während der zweiten Hälfte der Dauer dieser neu eingehenden Dreierfolge von Zeilen, also während deren Einschreibintervall w, zusammen mit der Bewegungsinformation in diejenigen Speicherbezirke eingeschrieben, in denen das um eine Vollbilddauer verzögerte Datenwort der n- bzw. m-ten Zeile bisher stand, wodurch dieses vorige Datenwort durch das neue ersetzt wird. Mit den beiden restlichen Datenworten der verzögerten und der neu eingehenden Dreierfolge wird in gleicher Weise verfahren.

Schließlich wird zur flimmerfreien Bildwiedergabe mittels erhöhter Bildwiedergabefrequenz der erste bzw. zweite Wortblock jeden Datenworts der n-ten Zeile zusammen mit dem ersten bzw. zweiten Wortteil jedes Datenworts der m-ten Zeile ausgelesen, was, wie oben bereits dargelegt wurde, ein- oder zweimal mit der doppelten Zeilenfrequenz geschieht, je nachdem ob die Vollbildwiedergabe mit 50 Hz oder mit 100 Hz erfolgen soll. In den Teilfiguren b und d der Fig. 4 bis 6 ist die zeitliche Zuordnung der aus den einzelnen Zeilen der Halbbilder stammenden Teile schematisch gezeigt. Es gehören somit gleiche Wortblöcke und Wortteile der im Vollbild unmittelbar aufeinanderfolgenden Zeilen n, m zusammen, wie z.B. in Figuren 4b und d die in einer Spalte jeweils untereinanderstehenden Zeilennummern 1,6; 7,2; 2,7 etc. zeigen, wobei die ersten Wortblöcke und die ersten Wortteile bzw. die zweiten Wortblöcke und und die zweiten Wortteile stets untereinander stehen. In den Figuren 5 b, d und 6 b, d befinden sich die zusätzlich vorhandenen dritten Wortblöcke mit den zusätzlich vorhandenen dritten Wortteilen ebenfalls in untereinanderstehenden Speicherbezirken, was schließlich auch für die in Figuren 6 b und d dargestellten vierten Wortblöcke und vierten Wortteile gilt.

Jeweils einer der drei untereinanderstehenden Speicherbezirke sp1, sp2, sp3 nimmt somit an dem (schnellen) Auslesevorgang für die flimmerfreie Bildwiedergabe mit erhöhter Bildwiedergabefrequenz nicht teil und steht somit für das (langsamere) zeilenfrequente Auslesen der Einschreiben zur Verfügung. In den Teilfiguren b und d der Fig. 4 bis 6 ist dies durch ein Leerfeld im jeweiligen Speicherbezirk dargestellt -es korrespondiert mit dem jeweils ausgelesenen oder eingeschriebenen Speicherbezirk des darüber dargestellten zeilenfrequenten Speicherschemas nach den zugehörigen Teilfiguren a und b der Fig. 4 bis 6.

Bei einer geraden Anzahl von Wortteilen bzw. Wortblöcken werden zum wortteil- bzw. wortblockweisen Ein- und Auslesen jeweils drei Zeilen zu einer Dreierfolge zusammengefaßt, vgl. Fig. 4 und 6. Das zugehörige Auslese- bzw. Einschreibintervall r, w ergibt sich aus der ersten bzw. zweiten Hälfte der Gesamtempfangsdauer der Dreierfolge. Bei einer ungeraden Anzahl von Wortteilen bzw. Wortblöcken kann das wortteil- bzw. wortblockweise Einschreiben und Auslesen ohne Überschneidung bereits während der Empfangsdauer einer einzigen Zeile erfolgen. Das zugehörige Auslese- bzw. Einschreibintervall r, w ist dann durch die erste bzw. zweite Hälfte einer einzigen Zeilenempfangsdauer bestimmt. Fig. 5 zeigt hierzu ein einfaches Beispiel, und zwar wird jede Zeile, also jedes Datenwort, in drei zeitlich gleichlange Wortteile oder Wortblöcke aufgeteilt, die während des Einschreibintervalls w unmittelbar aufeinanderfolgend in drei unterschiedliche Speicherbezirke (bei Bewegungserkennung evtl. modifiziert) eingelesen werden, dort während der Dauer eines Vollbildes gespeichert werden, um dann während des Ausleseintervalls r für den Bewegungsvergleich im Bewegungsdetektor bt wieder ausgelesen zu werden. Die eigentliche flimmerfreie Bildwiedergabe erfolgt unabhängig davon, wie in den Fig. 4 und 6, mit der doppelten Zeilenfrequenz ein- bzw. zweimal, je nachdem ob die flimmerfreie Wiedergabe mit 50 Hz oder mit 100 Hz erfolgen soll.

Aus der eben erläuterten Aufteilung der Datenwörter auf die einzelnen Speicherbezirke wird ersichtlich, daß aufgrund des gewählten zeilenfrequenten Einschreib/Auslesezyklus und des entsprechend doppelt schnellen Auslesezyklus jeder Speicherbezirk immer nur für eine einzige Datenübertragung benötigt wird. Daraus ergibt sich der Vorteil, daß die Datenbusse stets gleichmäßig belastet sind. Außerdem ist es, wie in Fig. 3 durch das gestrichelte Rechteck angedeutet ist, möglich, einer Probleme mit der Komplexität oder der Anzahl von äußeren Anschlüssen der integrierten Schaltung die innerhalb dieses Rechtecks angeordneten Teilschaltungen in einer einzigen integrierten Schaltung ic zu integrieren.

Die vier Zuordnungsschemata der Fig. 5 gelten für eine andere Aufteilung der Datenwörter, nämlich jeweils in drei Wortblöcke bzw. Wortteile. Wie aus den Fig. 5a und 5c ersichtlich, erfolgt das direkt aufeinanderfolgende Einschreiben so, daß der erste Wortblock im ersten Speicherbezirk sp1, der zweite Wortblock im zweiten Speicherbezirk sp2 und der dritte Wortblock im dritten Speicherbezirk sp3 gespeichert wird (fig. 5a). Der erste Wortteil wird entsprechend Fig. 5c im zweiten Speicherbezirk sp2, der zweite Wortteil im dritten Speicherbezirk sp3 und der dritte Wortteil im ersten Speicherbezirk sp1 gespeichert. Entsprechend den Fig. 5b und d stehen wiederum gleichartige Datenwortteile in Spalten übereinander, die mit doppelter Zeilenfrequenz ausgelesen werden. Im übrigen ist die Verarbeitung im Bewegungsdetektor bt und das Rückspeichern während der Zeitdauer w entsprechend gleich wie bei der Lösungsvariante nach Fig. 4.

Fig. 6 zeigt schließlich das Zuordnungsschema der Datenwörter für eine dritte Lösungsvariante der Erfindung, nämlich daß die Datenwörter in vier Wortblöcke bzw. Wortteile aufgeteilt sind. In diesem Fall wird der erste Wortblock einer n-ten Zeile in ersten Speicherbezirk sp1, deren zweiter Wortblock im zweiten Speicherbezirk sp2, deren dritter Wortblock im dritten Speicherbezirk sp3 und deren vierter Wortblock im ersten Speicherbezirk sp1 gespeichert. Der erste Wortblock einer (n+1)-ten Zeile wird im zweiten Speicherbezirk sp2, deren zweiter Wortblock im dritten Speicherbezirk sp3, deren dritter Wortblock im ersten Speicherbezirk sp1 und deren vierter Wortblock im zweiten Speicherbezirk sp2 gespeichert. Schließlich wird der erste Wortblock einer (n+2)-ten Zeile im dritten Speicherbezirk sp3, deren zweiter Wortblock im ersten Speicherbezirk sp1, deren dritter Wortblock im zweiten Speicherbezirk sp2 und deren vierter Wortblock im dritten Speicherbezirk sp3 speichert.

Die Speicherung der vier Wortteile einer m-ten Zeile beginnt damit, daß der erste Wortteil im zweiten Speicherbezirk sp2, der zweite Wortteil im dritten Speicherbezirk sp3 usw. gespeichert wird, wie dies die Fig. 6c zeigt. Auch in diesem Fall sind die weiteren Vorgänge mit denen der beiden anderen Lösungsvarianten nach den Fig. 4 und 5 entsprechend gleichartig.

Für die Realisierung des Vollbildspeichers vs und der intergrierten Schaltung ic bietet sich eine der für Digitalschaltungen üblichen Integrierungstechniken an, wobei insbesondere die Technik der integrierten Isolierschicht-Feldeffekt-Transistor-Schaltungen von besonderem Interesse ist, also die sogenannnte MOS-Technik. In diesem Falle kann die Erfindung mit den schon in der Fachliteratur beschriebenen integrierten Schaltungen für die digitale Signalverarbeitung in Fernsehempfängern zusammenarbeiten, vgl. z.B. "Electronics", 11. August 1981, Seiten 97 bis 103. Die eingangs erwähnte Umsetzung des im Fernsehempfänger auf der analogen Seite gewonnenen Videosignals in ein digitales Videosignal und dessen Weiterverarbeitung auf der digitalen Seite kann beim Fernsehempfänger der Erfindung in der vorbeschriebenen Wiese geschehen. Aus diesem Grund sind auch die entsprechenden Teilschaltungen in den Figuren der Zeichnung nicht angegeben, sondern es wird vorausgesetzt, daß die erwähnten vorbeschriebenen Teilschaltungen das digitale Videosignal dv nach Fig. 3 bereitstellen.

## Patentansprüche

1. Fernsehempfänger, der ein nach einem Zwischenzeilenverfahren aufbereitetes, Halbbilder (H1, H2) enthaltendes Videosignal nach Analog-Digital-Wandlung, digitaler Signalverarbeitung und Digital-Analog-Wandlung durch Erhöhung der Bildwiedergabefrequenz flimmerfrei wiedergibt, mit digitalen Speichern für das digitale Videosignal (dv), einem digitalen Bewegungsdetektor (bt) und einem digitalen Halbbild-Interpolator (ip), an dessen Ausgang das digitale flimmerfreie Videosignal (fv) auftritt, wobei der Bewegungsdetektor (bt) die anteilmäßige Zusammensetzung des mit erhöter Frequenz wiedergegebenen Vollbildes aus den beiden Halbbildern (H1, H2) steuert, gekennzeichnet durch folgende Merkmale:

es ist ein einziger Vollbildspeicher (vs) vorgesehen, der in einen ersten, einen zweiten und einen dritten Speicherbezirk (sp1, sp2, sp3) mit jeweils zugeordnetem ersten, zweiten und dritten Zweirichtungs-Datenbus (db1, db2, db3) für wortteil/wortblockwiesen Ein-Richtungsbetrieb aufgeteilt ist,

ein erster, zweiter und dritter Multiplexer (mx1, mx2, mx3) ist über jeden Zweirichtungs-Datenbus (db1, db2, db3) mit jedem Speicherbezirk (sp1, sp2, sp3) verbunden,

der erste bzw. zweite Multiplexer (mx1, mx2) liegt ferner über einen ersten bzw. einen zweiten Ein-Richtungs-Datenbus (eb1, eb2) am ersten bzw. am zweiten Eingang des Halbbild-Interpolators (ip),

der dritte Multiplexer (mx3) ist über einen vierten Zweirichtungs-Datenbus (db4) für wortteil/wortblockwiesen Ein-Richtungsbetrieb mit dem Bewegungsdetektor (bt) verbunden, dem auch das dritte Videosignal (dv) zugeführt ist, und

eine an einem Taktoszillator betriebene Ablaufsteuerschaltung (cc) steuert während eines Einschreibintervalls (w) bzw. während eines Ausleseintervalles (r) das zeilenfrequente Einschreiben bzw. Auslesen der auf halbe Zeilendauer komprimierten Information einer Zeile (=Datenwort) in die drei Speicherbezirke (sp1, sp2, sp3) und das ein- bzw. zweimalige Auslesen aus ihnen mit der doppelten Zeilenfrequenz bei einer Vollbildwiedergabefrequenz von 50 Hz bzw. 100 Hz sowie den Bewegungsdetektor (bt), die drei Multiplexer (mx1, mx2, mx3) und den Halbild-Interpolator (ip) derart,

daß jedes Datenwort einer Zeile des ersten Halbbildes (H1) in zwei Wortblöcke aufgeteilt ist und direkt aufeinanderfolgend der erste Wortblock einer n-ten Zeile (n=1, 4, 7,..., N/2; N=Vollbildzeilenzahl oder nur Anzahl der Zeilen mit Bildinformation) im ersten Speicherbezirk (sp1) und deren zweiter Wortblock im zweiten Speicherbezirk (sp2), der erste Wortblock einer (n+1)-ten Zeile (n+1=2, 5, 8,..., N/2) im dritten Speicherbezirk (sp3) und deren zweiterer Block im ersten Speicherbezirk (sp1) sowie der erste Wortblock einer (n+2)-ten Zeile (n+2=3, 6, 9,..., N/2) im zweiten Speicherbezirk (sp2) und deren zweiter Wortblock im dritten Speicherbezirk (sp3) gespeichert wird,

daß jedes Datenwort einer Zeile des zweiten Halbbildes (H2) in zwei Wortteile aufgestellt ist und direkt aufeinanderfolgend der erste Wortteil einer m-ten Zeile (m=1+N/2, 4+N/2, 5+N/2,..., N) im zweiten Speicherbezirk (sp2) und deren zweiter Wortteil im dritten Speicherbezirk (sp3), der erste Wortteil einer (m+1)-ten Zeile (m+1=2+N/2, 5+N/2, 8+N/2,..., N) im ersten Speicherbezirk (sp1) und deren zweiter Wortteil im zweiten Speicherbezirk (sp2) sowie der erste Wortteil einer (m+2)-ten Zeile (m+2=3+N/2, 6+N/2, 9+N/2,..., N) im dritten Speicherbezirk (sp3) und deren zweiter Wortteil im ersten Speicherbezirk (sp1) gespeichert wird,

daß während der ersten Hälfte der Eingangsdauer einer neuen Dreierfolge aufeinanderfolgender Zeilen (n, n+1, n+2; m, m+1, m+2), dem Ausleseintervall (r), die bereits um eine Vollbilddauer verzögerten Datenworte der zeilennummerngleichen Dreierfolge aus dem Vollbildspeicher (vs) ausgelesen und mit den jeweils zeilennummerngleichen Datenworten dieser neuen Dreierfolge im Bewegungsdetektor (bt) verglichen und während der zweiten Hälfte der Eingangsdauer dieser neuen Dreierfolge, dem Einschreibintervall (w), zusammen mit der Bewegungsinformation in diejenigen Speicherbezirke eingeschrieben wird, in denen die um eine Vollbilddauer verzögerten Datenworte stehen, und

daß für die flimmerfreie Bildwiedergabe mittels erhöhter Bildwiedergabefrequenz der erste bzw. zweite Wortblock jeden Datenworts zusammen mit dem ersten bzw. zweiten Wortteil jedes Datenworts dieser beiden zeilenverschachtelten Dreierfolgen ausgelesen wird.

2. Fernsehempfänger, der ein nach einem Zwischenzeilenverfahren aufbereitetes, Halbbilder (H1, H2) enthaltendes Videosignal nach Analog-Digital-Wandlung, digitaler Signalverarbeitung und Digital-Analog-Wandlung durch Erhöhung der Bildwiedergabefrequenz flimmerfrei wiedergibt, mit digitalen Speichern für das digitale Videosignal (dv), einem digitalen Bewegungsdetektor (bt) und einem digitalen Halbbild-Interpolator (ip), an dessen Ausgang das digitale flimmerfreie Videosignal (fv) auftritt, wobei der Bewegungsdetektor (bt) die anteilmäßige Zusammensetzung des mit erhöhter Frequenz wiedergegebenen Vollbildes aus den beiden Halbbildern (H1, H2) steuert, gekennzeichnet durch folgende Merkmale:

es ist ein einziger Vollbildspeicher (vs) vorgesehen, der in einen ersten, einen zweiten und einen dritten Speicherbezirk (sp1, sp2, sp3) mit jeweils zugeordnetem ersten, zweiten und dritten Zweirichtungs-Datenbus (db1, db2, db3) für wortteil/wortblockweisen Ein-Richtungsbetrieb aufgeteilt ist,

ein erster, zweiter und dritter Multiplexer (mx1, mx2, mx3) ist über jeden Zweirichtungs-Datenbus (db1, db2, db3) mit jedem Speicherbezirk (sp1, sp2, sp3) verbunden,

der erste bzw. zweite Multiplexer (mx1, mx2) liegt ferner über einen ersten bzw. einen zweiten Ein-Richtungs-Datenbus (eb1, eb2) am ersten bzw. am zweiten Eingang des Halbbild-Interpolators (ip),

der dritte Multiplexer (mx3) ist über einen vierten Zweirichtungs-Datenbus (db4) für wortteil/wortblockwiesen Ein-Richtungsbetrieb mit dem Bewegungsdetektor (bt) verbunden, dem auch das digitale Videosignal (dv) zugeführt ist, und

eine an einem Taktoszillator betriebene Ablaufsteuerschaltung (cc) steuert während eines Einschreibintervalls (w) bzw. während eines Ausleseintervalles (r) das zeilenfrequente Einschreiben bzw. Auslesen der auf halbe Zeilendauer komprimierten Information einer Zeile (=Datenwort) in die drei Speicherbezirke (sp1, sp2, sp3) und das ein- bzw. zweimalige Auslesen aus ihnen mit der doppelten Zeilenfrequenz bei einer Vollbildwiedergabefrequenz von 50 Hz bzw. 100 Hz sowie den Bewegungsdetaktor (bt), die drei Multiplexer (mx1, mx2, mx3) und den Halbbild-Interpolator (ip) derart,

daß jedes Datenwort einer n-ten Zeile des ersten Halbbildes (H1) (n=1, 2, 3,..., N/2; N=Vollbildzeilenzahl oder nur Anzahl der Zeilen mit Bildinformation) in drei Wortblöcke aufgeteilt ist und direkt aufeinanderfolgend der erste Wortblock der n-ten Zeile im ersten Speicherbezirk (sp1), der zweite Wortblock im zweiten Speicherbezirk (sp2) und der dritte Wortblock im dritten Speicherbezirk (sp3) gespeichert wird,

daß jedes Datenwort einer m-ten Zeile des zweiten Halbbildes (H2) (m=1+N/2; 2+N/2; 3+N/2,..., N) in drei Wortteile aufgeteilt ist und direkt aufeinanderfolgend der erste Wortteil der m-ten Zeile im zweiten Speicherbezirk (sp2), der zweite Wortteil im dritten Speicherbezirk (sp3) und der dritte Wortteil im ersten Speicherbezirk (sp1) gespeichert wird,

daß während der ersten Hälfte der Eingangsdauer einer neuen n- bzw. einer neuen m-ten Zeile, dem Ausleseintervall (r), das um eine Vollbilddauer verzögerte Datenwort der n- bzw. m-ten Seile aus dem Vollbildspeicher (vs) ausgelesen, mit dem neuen Datenwort der n- bzw. m-ten Zeile im Bewegungsdetektor (bt) verglichen und während der zweiten Hälfte der Eingangsdauer dieser neuen n-ten bzw. m-ten Zeile, dem Einschreibintervall (w), zusammen mit der Bewegungsinformation in diejenigen Speicherbezirke eingeschrieben wird, in denen das um eine Vollbilddauer verzögerte Datenwort steht, und

daß für die flimmerfreie Bildwiedergabe mittels erhöhter Bildwiedergabefrequenz der erste bzw. zweite bzw. dritte Wortblock jeden Datenworts der n-ten Zeile zusammen mit dem ersten bzw. zweiten bzw. dritten Wortteil jedes Datenworts der benachbarten m-ten Zeile ausgelesen wird.

3. Fernsehempfänger, der ein nach einem Zwischenzeilenverfahren aufbereitetes, Halbbilder (H1, H2) enthaltendes Videosignal nach Analog-Digital-Wandlung, digitaler Signalverarbeitung und Digital-Analog-Wandlung durch Erhöhung der Bildwiedergabefrequenz flimmerfrei wiedergibt, mit digitalen Speichern für das digitale Videosignal (dv), einem digitalen Bewegungsdetektor (bt) und einem digitalen Halbbild-Interpolator (ip), an dessen Ausgang das digitale flimmerfreie Videosignal (fv) auftritt, wobei der Bewegungsdetektor (bt) die anteilmäßige Zusammensetzung des mit erhöhter Frequenz wiedergegebenen Vollbildes aus den beiden Halbbildern (H1, H2) steuert, gekennzeichnet durch folgende Merkmale:

es ist ein einziger Vollbildspeicher (vs) vorgesehen, der in einen ersten, einen zweiten und einen dritten Speicherbezirk (sp1, sp2, sp3) mit jeweils zugeordnetem ersten, zweiten und dritten Zweirichtungs-Datenbus (db1, db2, db3) für wortteil/wortblockweisen Ein-Richtungsbetrieb aufgeteilt ist,

ein erster, zweiter und dritter Multiplexer (mx1, mx2, mx3) ist über jeden Zweirichtungs-Datenbus (db1, db2, db3) mit jedem Speicherbezirk (sp1, sp2, sp3) verbunden,

der erste bzw. zweite Multiplexer (mx1, mx2) liegt ferner über einen ersten bzw. zweiten Ein-Richtungs-Datenbus (eb1, eb2) am ersten bzw. am zweiten Eingang des Halbbild-Interpolators (ip),

der dritte Multiplexer (mx3) ist über einen vierten Zweirichtungs-Datenbus (db4) für wortteil/wortblockwiesen Ein-Richtungsbetrieb mit dem Bewegungsdetektor (bt) verbunden, dem auch das digitale Videosignal (dv) zugeführt ist, und

eine an einem Taktoszillator betriebene Ablaufsteuerschaltung (cc) steuert während eines Einschreibintervalls (w) bzw. während eines Ausleseintervalls (r) des zeilenfrequente Einschreiben bzw. Auslesen der auf halbe Zeilendauer komprimierten Information einer Zeile (=Datenwort) in die drei Speicherbezirke (sp1, sp2, sp3) und bei einer Vollbildwiedergabefrequenz von 50 Hz bzw. 100 Hz das ein- bzw. zweimalige Auslesen aus ihnen mit der doppelten Zeilenfrequenz sowie den Bewegungsdetektor (bt), die drei Multiplexer (mx1, mx2, mx3) und den Halbbild-Interpolator (ip) derart,

daß jedes Datenwort einer Zeile des ersten Halbbildes (H1) in vier Wortblöcke aufgeteilt ist und direkt aufeinanderfolgend der erste Wortblock einer n-ten Zeile (n=1, 4, 7,..., N/2; N=Vollbildzeilenzahl oder nur Anzahl der Zeilen mit Bildinformation) im ersten Speicherbezirk (sp1), deren zweiter Wortblock im zweiten Speicherbezirk (sp2), deren dritte Wortblock im dritten Speicherbezirk (sp3) und deren vierter Wortblock im ersten Speicherbezirk (sp1), der erste Wortblock einer (n+1)-ten Zeile (n+1=2, 5, 8,..., N/2) im zweiten Speicherbezirk (sp2), deren zweiter Wortblock im dritten Speicherbezirk (sp3), deren dritter Wortblock im ersten Speicherbezirk (sp1) und deren vierter Wortblock im zweiten Speicherbezirk (sp2) sowie der erste Wortblock einer (n+2)-ten Zeile (n+2=3, 6, 9,..., N/2) im dritten Speicherbezirk (sp3), deren zweiter Wortblock im ersten Speicherebzirk (sp1), deren dritter Wortblock im zweiten Speicherbezirk (sp2) und deren vierter Wortblock im dritten Speicherbezirk (sp3) gespeichert wird,

daß jedes Datenwort einer Zeile des zweiten Halbbildes (H2) in vier Wortteile aufgeteilt ist und direkt aufeinanderfolgend der erste Wortteil einer m-ten Zeile (m=1+N/2, 4+N/2, 7+N/2,..., N) im zweiten Speicherbezirk (sp2), deren zweiter Wortteil im dritten Speicherbezirk (sp3), deren dritter Wortteil im ersten Speicherbezirk (sp1) und deren vierter Wortteil im zweiten Speicherbezirk (sp2), der erste Wortteil einer (m+1)-ten Zeile (m+1=2+N/2, 5+N/2, 8+N/2,..., N) im dritten Speicherbezirk (sp3), deren zweiter Wortteil im ersten Speicherbezirk, deren dritter Wortteil im zweiten Speicherbezirk (sp2) und deren vierter Wortteil im dritten Speicherbezirk (sp3) sowie der erste Wortteil einer (m+2)-ten Zeile (m+2=3+N/2, 6+N/2, 9+N/2,..., N) im ersten Speicherbezirk (sp1), deren zweiter Wortteil im zweiten Speicherbezirk (sp2), deren dritter Wortteil im dritten Speicherbezirk (sp3), und deren vierter Wortteil im ersten Speicherbezirk (sp1) gespeichert wird,

daß während der ersten Hälfte der Eingangsdauer einer neuen Dreierfolge aufeinanderfolgender Zeilen (n, n+1, n+2, m, m+1, m+2), dem Ausleseintervall (r), die um eine Vollbilddauer verzögerten Datenworte der zeilennummerngleichen Dreierfolge aus dem Vollbildspeicher (vs) ausgelesen, mit den jeweils zeilennummerngleichen Datenworten dieser neuen Dreierfolge im Bewegungsdetektor (bt) vergleichen und während der zweiten Hälfte der Eingangsdauer dieser neuen Dreierfolge, dem Einschreibintervall (w), zusammen mit der Bewegungsinformation in diejenigen Speicherbezirke eingeschrieben wird, in denen die um eine Vollbilddauer verzögerte Datenworte stehen, und

daß für die flimmerfreie Bildwiedergabe mittels erhöhter Bildwiedergabefrequenz der erste bzw. zweite bzw. dritte bzw. vierte Wortblock jeden Datenworts der n-ten Zeile zusammen mit dem ersten bzw. zweiten bzw. dritten bzw. vierten Wortteil jedes Datenworts der m-ten Zeile ausgelesen wird.

## Revendications

1. Récepteur de télévision, qui reproduit sans papillottements un signal vidéo, préparé au moyen d'un procédé de balayage entrelacé et contenant des trames (H1, H2), après conversion analogique/numérique, traitement numérique du signal et conversion numérique/analogique, moyennant un accroissement de la fréquence de reproduction des images, et comportant des mémoires numériques pour le signal vidéo numérique (dv), un détecteur numérique de déplacements (bt) et un dispositif (ip) d'interpolation numérique des trames, à la sortie duquel apparaît le signal vidéo numérique (fv) exempt de papillottement, le détecteur (bit) de déplacements commandant la composition proportionnelle de l'image complète reproduite avec une fréquence accrue, à partir des deux trames (H1, H2), caractérisé par les caractéristiques suivantes:

il est prévu une mémoire unique d'images complètes (vs), qui est subdivisée en des premier, second et troisième domaines de mémoire (sp1, sp2, sp3) comportant des premier, second et troisième bus bidirectionnels respectivement associés (db1, db2, db3) de transmission de données pour le fonctionnement unidirectionnel portant sur des éléments de mot/des blocs de mots,

des premier, second et troisième multiplexeurs (mx1, mx2, mx3) sout reliés à chaque domaine de mémoire (sp1, sp2, sp3) par l'intermédiaire de chaque bus bidirectionnel (db1, db2, db3) de transmission de données,

le premier ou le second multiplexeur (mx1, mx2) est en outre raccordé par l'intermédiaire d'un premier ou d'un sécond bus unidirectionnel (eb1, eb2) de transmission de données à la première ou à la seconde entrée du dispositif (ip) d'interpolation de trames,

le troisième multiplexeur (mx3) est relié, par l'intermédiaire d'un quatrième bus bidirectionnel (db4) de transmission de données, pour un fonctionnement unidirectionnel portant sur des éléments de mot/des blocs de mots, au détecteur de déplacements (bt), auquel est également envoyé le troisième signal vidéo (dv), et

un circuit de commande d'exécution (cc) alimenté par un oscillateur délivrant une cadence, commande, pendant un intervalle d'enregistrement (w) on pendant un intervalle de lecture (r), l'enregistrement ou la lecture, à la fréquence des lignes, de l'information, comprimée à la moitié de la durée d'une ligne (=mot de données) dans les trois domaines de mémoire (sp1, sp2, sp3) et la lecture unique ou redoublée de l'information à partir des domaines de mémoire avec une fréquence double de la fréquence des lignes, pour une fréquence de reproduction d'images complètes égale à 50 Hz on 100 Hz, ainsi que le détecteur de déplacements (bt), les trois multiplexeurs (mx1, mx2, mx3) et le dispositif (ip) d'interpolation de trames, de telle sorte

que chaque mot de données d'une ligne de la première trame (H1) est subdivisé en deux blocs de mots et, directement successivement le premier bloc de mots d'une n-ème ligne (n=1, 4, 7,..., N/2, N=nombre de lignes d'une image complète ou uniquement nombre des lignes comportant une information d'image) est mémorisé dans le premier domaine de mémoire (sp1), et le second bloc de mot est mémorisé dans le second domaine de mémoire (sp2), le premier bloc de mots d'une (n+1)-ème ligne (n+1=2, 5, 8,..., N/2) est mémorisé dans le troisième domaine de mémoire (sp3) et le second bloc de cette ligne est mémorisé dans le premier domaine de mémoire (sp1), et le premier bloc de mots d'une (n+1)-ème ligne (n+2=3, 6, 9,..., N/2) est mémorisé dans le second domaine de mémoire (sp2) et le second bloc de mots de cette ligne est mémorisé dans le troisième domaine de mémoire (sp3),

que chaque mot de données d'une ligne de la seconde trame (H2) est subdivisée en deux éléments de mot et directement successivement, le premier élément de mot d'une m-ème ligne (m=1+N/2, 4+N/2, 5+N/2..., N) est mémorisé dans le second domaine de mémoire (sp2) et le premier élément de mot de cette ligne est mémorisé dans le troisième domaine de mémoire (sp3), le premier élément de mot d'une (m+1) ligne (m+1=2+N/2, 5+N/2, 8+N/2,..., N) est mémorisé dans le premier domaine de mémoire (sp1) et le second élément de mot de cette ligne est mémorisé dans le second domaine de mémoire (sp2), et le premier élément de mot d'une (m+2)-ème ligne (m+2=3+N/2, 6+N/2, 9+N/2,..., N) est mémorisé dans le troisième domaine de mémoire (sp3) et le second élément de mot de cette ligne est mémorisé dans le premier domaine de mémoire (sp1),

que pendant la première moitié de la durée d'entrée d'un nouveau triplet de lignes successives (n, n+1, n+2, m, m+1, m+2), à savoir l'intervalle de lecture (r), les mots de données, déjà retardés de la durée d'une image complète, du triplet possédant les mêmes numéros de lignes sont lus à partir de la mémoire d'images complète (vs) et est comparé aux mots respectifs de données, possédant les mêmes numéros de lignes, de ce nouveau triplet, dans le détecteur de déplacements (bt), et, pendant la seconde moitié de la durée d'entrée de ce nouveau triplet, à savoir l'intervalle d'enregistrement (w), sont enregistrés conjointement avec l'information de déplacement dans les domaines de mémoire, dans lequels sont situés les mots de données retardés de la durée d'une image complète, et

que, pour la reproduction de l'image sans papillottement le premier ou le second bloc de chaque mot de données est lu, à l'aide d'une fréquence accrue de reproduction d'images, conjointement avec le premier ou le second élément de chaque mot de données de ces deux triplets de lignes imbriquées.

2. Récepteur de télévision, qui reproduit sans papillottements un signal vidéo, préparé au moyen d'un procédé de balayage entrelacé et contenant des trames (H1, H2), après conversion analogique/numérique, traitement numérique du signal et conversion numérique/analogique, moyennant un accroissement de la fréquence de reproduction des images, et comportant des mémoires numériques pour le signal vidéo numérique (dv), un détecteur numérique de déplacements (bt) et un dispositif (ip) d'interpolation numérique des trames, à la sortie duquel apparaît le signal vidéo numérique (fv) exempt de papillottement, le détecteur (bt) de déplacements commandant la composition proportionnelle de l'image complète reproduite avec une fréquence accrue, à partir des deux trames (H1, H2), caractérisé par les caractéristiques suivantes:

il est prévu une mémoire unique d'image complètes (vs), qui est subdivisée en des premier, second et troisième domaines de mémoire (sp1, sp2, sp3) comportant des premier, second et troisième bus bidirectionnels respectivement associés (db1, db2, db3) de transmission de données pour le fonctionnement unidirectionnel portant sur des éléments de mot/des blocs de mots,

des premier, second et troisième multiplexeurs (mx1, mx2, mx3) sont reliés à chaque domaine de mémoire (sp1, sp2, sp3) par l'intermédiaire de chaque bus bidirectionnel (db1, db2, db3) de transmission de données,

le premier ou le second multiplexeur (mx1, mx2) est en outre raccordé par l'intermédiaire d'un premier ou d'un second bus unidirectionnel (eb1, eb2) de transmission de données à la première ou à la seconde entrée du dispositif (ip) d'interpolation de trames,

le troisième multiplexeur (mx3) est relié, par l'intermédiaire d'un quatrième bus bidirectionnel (db4) de transmission de données, pour un fonctionnement unidirectionnel portant sur des éléments de mot/des blocs de mots, au détecteur de déplacements (bt), auquel est également envoyé le troisième signal vidéo (dv), et

un circuit de commande d'exécution (cc) alimenté par un oscillateur délivrant une cadence, commande, pendant un intervalle d'enregistrement (w) ou pendant un intervalle de lecture (r), l'enregistrement ou la lecture, à la fréquence des lignes, de l'information, comprimée à la moitié de la durée d'une ligne (=mot de données) dans les trois domaines de mémoire (sp1, sp2, sp3) et la lecture unique ou redoublée de l'information à partir des domaines de mémoire avec une fréquence double de la fréquence des lignes, pour une fréquence de reproduction d'images complètes égale à 50 Hz ou 100 Hz, ainsi que le détecteur de déplacements (bt), les trois multiplexeurs (mx1, mx2, mx3) et le dispositif (ip) d'interpolation de trames, de telle sorte

que chaque mot de données d'une n-ème ligne de la première trame (H1) (n=1, 2, 3,..., N/2, N=nombre de lignes d'une image complète ou seulement nombre des lignes comportant une information d'image) est subdivisé en trois blocs de mots et, directement successivement, le premier bloc de mots de la n-ème ligne est mémorisé dans le premier domaine de mémoire (sp1), le second bloc de mots est mémorisé dans le second domaine de mémoire (sp2) et le troisième bloc de mots est mémorisé dans le troisième domaine de mémoire (sp3),

que chaque mot de données d'une m'ème ligne de la seconde trame (H2) (m=1+N/2; 2+N/2; 3+N/2,..., N) est subdivisé en trois éléments de mot et, directement successivement, le premier élément de mot de la m-ème ligne est mémorisé dans le second domaine de mémoire (sp2), le second élément de mot est mémorisé dans le troisième domaine de mémoire (sp3) et le troisième élément de mot est mémorisé dans le premier domaine de mémoire (sp1),

que, pendant la première moitié de la durée d'entrée d'une nouvelle n-ème ligne ou d'une nouvelle m-ème ligne, à savoir l'intervalle de lecture (r), le mot de données, retardé de la durée d'une image complète, de la n-ème ligne ou de la m-ème ligne est lu à partir de la mémoire d'images complètes (vs), est comparé au nouveau mot de données de la n-ème ou de la m-ème ligne dans le détecteur de déplacements (bt) et, pendant la seconde moitié de la durée d'introduction de cette nouvelle n-ème ligne ou m-ème ligne, à savoir l'intervalle d'enregistrement (w), est enregistré conjointement avec l'information de dépalcement dans les domaines de mémoire, dans lesquels est présent le mot de données retardé de la durée d'une image complète, et

que pour la reproduction sans papillottements le premier ou le second ou le troisième bloc de chaque mot de données de la n-ème ligne est lu, conjointement avec le premier ou le second ou le troisième élément de chaque mot de données de la m-ème ligne voisine, au moyen d'une fréquence accrue de reproduction d'images.

3. Récepteur de télévision, qui reproduit sans papillotements un signal vidéo, préparé au moyen d'un procédé de balayage entrelacé et contenant des trames (H1, H2), après conversion analogique/numérique, traitement numérique du signal et conversion numérique/analogique, moyennant un accroissement de la fréquence de reproduction des images, et comportant des mémoires numériques pour le signal vidéo numérique (dv), un détecteur numérique de déplacements (bt) et un dispositif (ip) d'interpolation numérique des trames, à la sortie duquel apparaît le signal vidéo numérique (fv) exempt de papillottement, le détecteur (bt) de déplacements commandant la composition proportionnelle de l'image complète reproduite avec une fréquence accrue, à partir des deux trames (H1, H2), caractérisé par les caractéristiques suivantes:

il est prévu une mémoire unique d'images complètes (vs), qui est subdivisée en des premier, second et troisième domaines de mémoire (sp1, sp2, sp3) comportant des premier, second et troisième bus bidirectionnels respectivement associés (db1, db2, db3) de transmission de données pour le fonctionnement unidirectionnel portant sur des éléments de mot/des blocs de mots,

des premier, second et troisième multiplexeurs (mx1, mx2, mx3) sont reliés à chaque domaine de mémoire (sp1, sp2, sp3) par l'intermédiaire de chaque bus bidirectionnel (db1, db2, db3) de transmission de données,

le premier ou le second multiplexeur (mx1, mx2) est en outre raccordé par l'intermédiaire d'un premier ou d'un second bus unidirectionnel (eb1, eb2) de transmission de données à la première ou à la seconde entrée du dispositif (ip) d'interpolation de trames,

le troisième multiplexeur (mx3) est relié, par l'intermédiaire d'un quatrième bus bidirectionnel (db4) de transmission de données, pour un fonctionnement unidirectionnel portant sur des éléments de mot/des blocs de mots, au détecteur de déplacements (bt), auquel est également envoyé le troisième signal vidéo (dv), et

un circuit de commande d'exécution (cc) alimenté par un oscillateur délivrant une cadence, commande, pendant un intervalle d'enregistrement (w) ou pendant un intervalle de lecture (r), l'enregistrement ou la lecture, à la fréquence des lignes, de l'information, comprimée à la moitié de la durée d'une ligne (=mot de données) dans les trois domaines de mémoire (sp1, sp2, sp3) et la lecture unique ou redoublée de l'information à partir des domaines de mémoire avec une fréquence double de la fréquence des lignes, pour une fréquence de reproduction d'images complètes égale à 50 Hz ou 100 Hz, ainsi que le détecteur de déplacements (bt), les trois multiplexeurs (mx1, mx2, mx3) et le dispositif (ip) d'interpolation de trames, de telle sorte

que chaque mot de données d'une ligne de la première trame (H1) est subdivisé en quatre blocs de mots et, directement successivement, le premier bloc de mots d'une n-ème ligne (n=1, 4, 7,..., N/2; N=nombre de lignes de l'image complète ou seulement nombre des lignes comportant une information d'image) est mémorisé dans le premier domaine de mémoire (sp), le second bloc de mots de cette ligne est mémorisé dans le second domaine de mémoire (sp2), le troisième bloc de mots de cette ligne est mémorisé dans le troisième de mémoire (sp3) et le quatrième bloc de mots de cette ligne est mémorisé dans le premier domaine de mémoire (sp1), le premier bloc de mots d'une (n+1)-ème ligne (m+1=2, 5, 8,...N/2) est mémorisé dans le second domaine de mémoire (sp2), le second bloc de mots de cette ligne est mémorisé dans le troisième domaine de mémoire (sp3), le troisième bloc de mots de cette ligne est mémorisé dans le premier domaine de mémoire (sp1) et le quatrième bloc de mots de cette ligne est mémorisé dans le second domaine de mémoire (sp2), et le premier bloc de mots d'une (n+2)-ème ligne (n+2=3, 6, 9,..., N/2) est mémorisé dans le troisième domaine de mémoire (sp3), le second bloc de mots de cette ligne est mémorisé dans le premier domaine de mémoire (sp1), le troisième bloc de mots de cette ligne est mémorisé dans le second domaine de mémoire (sp2) et le quatrième bloc de mots de cette ligne est mémorisé dans le troisième domaine de mémoire (sp3),

que chaque mot de données d'une ligne de la seconde trame (H2) est subdivisé en quatre éléments de mot et, directement successivement, le première élément de mot d'une m-ème ligne (m=1+N/2, 4+N/2, 7+N/2,..., N) est mémorisé dans le second domaine de mémoire (sp2), le second élément de mot de cette ligne est mémorisé dans le troisième domaine de mémoire (sp3), le troisième élément de mot de cette ligne est mémorisé dans le premier domaine de mémoire (sp1) et le quatrième élément de mot de cette ligne est mémorisé dans le second élément de mémoire (sp2), le premier élément de mot d'une (m+1)-ème ligne (m+1=2+N/2, 5+N/2, 8+N/2,..., N) est mémorisé dans le troisième domaine de mémoire (sp3), le second élément de mot de cette ligne est mémorisé dans le premier domaine de mémoire, le troisième élément de mot de cette ligne est mémorisé dans le second domaine de mémoire (sp2) et le quatrième élément de mot de cette ligne est mémorisé dans le troisième domaine de mémoire (sp3) et le premier élément de mot d'une (m+1)-ème ligne (m+2=3+N/2, 6+N/2, 9+N/2,..., N) est mémorisé dans le premier domaine de mémoire (sp1), le second élément de mot de cette ligne est mémorisé dans le second domaine de mémoire (sp2), le troisième élément de mot de cette ligne est mémorisé dans le troisième domaine de mémoire (sp3) et le quatrième élément de mot de cette ligne est mémorisé dans le premier domaine de mémoire (sp1),

que pendant la première moitié de la durée d'entrée d'un nouveau triplet de lignes successives (n, n+1, n+2, m, m+1, m+2), à savoir l'intervalle de lecture (r), les mots de données, déjà retardés de la durée d'une image complète, du triplet possédant les mêmes numéros de lignes, sont lus à partir de la mémoire d'images complète (vs) et comparés au mot respectif de données, possédant le même numéro de ligne, de ce nouveau triplet, dans le détecteur de déplacements (bt), et pendant la seconde moitié de la durée d'entrée de ce nouveau triplet, à savoir l'intervalle d'enregistrement (w), sont enregistrés conjointement avec l'information de déplacement dans les domaines de mémoire, dans lesquels sont situés les mots de données retardés de la durée d'une image complète, et

que, pour la reproduction de l'image sans papillottement le premier ou le second bloc de chaque mot de données est lu, à l'aide d'une fréquence accrue de reproduction d'images, conjointement avec le premier ou le second ou le troisième ou le quatrième de chaque mot de données de la m-ème ligne.

**Claims**

1. Television receiver which by increasing the frame frequency, reproduces an interlaced video signal containing fields (H1, H2) flicker-free after analog-to-digital conversion, digital processing, and digital-to-analog conversion, comprising digital memories for the digital video signal (dv), a digital movement detector (bt), and a digital field interpolator (ip) whose output provides the flicker-free digital video signal (fv), the movement detector (bt) controlling the proportional composition of the reproduced frame from the two fields (H1, H2), characterized by the following features:

There is provided a single frame memory (vs) which is divided into a first memory area (sp1) with an associated first bidirectional data bus (db1), a second memory area (sp2) with an associated second bidirectional data bus (db2), and a third memory area (sp3) with an associated third bidirectional data bus (db3), the bidirectional data buses transferring word sections or word blocks in only one direction at a time;

a first multiplexer (mx1), a second multiplexer (mx2), and a third multiplexer (mx3) are connected to each memory area (sp1, sp2, sp3) by each bidirectional data bus (db1, db2, db3);

the first multiplexer (mx1) is also connected to the first input of the field interpolator (ip) by a first unidirectional data bus (eb1), and the second multiplexer (mx2) to the second input of the field interpolator (ip) by a second unidirectional data bus (eb2);

the third multiplexer (mx3) is connected, via a fourth bidirectional data bus (db4) transferring word sections or word blocks in only one direction at a time, to the movement detector (bt), which is also fed with the digital video signal (dv), and

a sequence control circuit (cc) controlled by a clock generator controls, during a write-in interval (w) and during a readout interval (r), the horizontal-frequency writing (w) into the three memory areas (sp1, sp2, sp3) of the information of a line compressed to one-half line period (=data word) and the single or double readout (r) from said areas at twice the horizontal frequency, and at a frame frequency of 50 Hz or 100 Hz, respectively, as well as the movement detector (bt), the three multiplexers (mx1, mx2, mx3), and the field interpolator (ip), such

that each data word of a line of the first field (H1) is divided into two blocks, and that the first word block of an nth line (n=1, 4, 7,..., N/2; N=number of frame lines or only number of lines containing picture information) is written into the first memory area (sp1), the second word block of this line into the second memory area (sp2), the first word block of an (n+1)st line (n+1=2, 5, 8,..., N/2) into the third memory area (sp3), the second word block of this line into the first memory area (sp1), the first word block of an (n+2)nd line (n+2=3, 6, 9,..., N/2) into the second memory area (sp2), and the second word block of this line into the third memory area in direct succession;

that each data word of a line of the second field (H2) is divided into two sections, and that the first word section of an mth line (m=1+N/2, 4+N/2, 5+N/2,..., N) is written into the second memory area (sp2), the second word section of this line into the third memory area (sp3), the first word section of an (m+1)st line (m+1=2+N/2, 5+N/2, 8+N/2,..., N) into the first memory area (sp1), the second word section of this line into the second memory area (sp2), the first word section of an (m+2)nd line (m+2=3+N/2, 6+N/2, 9+N/2,..., N) into the third memory area (sp3), and the second word section of this line into the first memory area (sp1) in direct succession;

that during the first half of the duration of a new triple sequence of successive lines (n, n+1, n+2; m, m+1, m+2), the readout interval (r), those data words of the triple sequence of the same line number which were already delayed by one frame period are read from the frame memory (vs) and compared with the corresponding data words of said new triple sequence in the movement detector (bt), and that during the second half of the duration of said new triple sequence, the write-in interval (w), said data words are written, together with the movement information, into those memory areas which contain the data word delayed by one frame period, and

that for flicker-free picture reproduction by increasing the frame frequency, the first and second word blocks of each data word are read out together with the first and second word sections, respectively, of each data word of these two line-interleaved triple sequences.

2. Television receiver which by increasing the frame frequency, reproduces an interlaced video signal containing fields (H1, H2) flicker-free after analog-to-digital conversion, digitial processing, and digital-to-analog conversion, comprising digital memories for the digital video signal (dv), a digital movement detector (bt), and a digital field interpolator (ip) whose output provides the flicker-free digital video signal (fv), the movement detector (bt) controlling the proportional composition of the reproduced frame from the two fields (H1, H2), characterized by the following features:

There is provided a single frame memory (vs) which is divided into a first memory area (sp1) with an associated first bidirectional data bus (db1), a second memory area (sp2) with an associated second bidirectional data bus (db2), and a third memory area (sp3) with an associated third bidirectional data bus (db3), the bidirectional data buses transferring word sections or word blocks in only one direction at a time;

a first multiplexer (mx1), a second multiplexer (mx2), and a third multiplexer (mx3) are connected to each memory area (sp1, sp2, sp3) by each bidirectional data bus (db1, db2, db3);

the first multiplexer (mx1) is also connected to the first input of the field interpolator (ip) by a first unidirectional data bus (eb1), and the second multiplexer (mx2) to the second input of the field interpolator (ip) by a second unidirectional data bus (eb2);

the third multiplexer (mx3) is connected, via a fourth bidirectional data bus (db4) transferring word sections or word blocks in only one direction at a time, to the movement detector (bt), which is also fed with the digital video signal (dv), and

a sequence control circuit (cc) controlled by a clock generator controls, during a write-in interval (w) and during a readout interval (r), the horizontal-frequency writing into the three memory areas (sp1, sp2, sp3) of the information of a line compressed to one-half line period (=data word) and the single or double readout from said areas at twice the horizontal frequency and at a frame frequency of 50 Hz or 100 Hz, respectively, as well as the movement detector (bt), the three multiplexers (mx1, mx2, mx3), and the field interpolator (ip), such

that each data word of an nth line of the first field (H1) (n=1, 2, 3,..., N/2; N=number of frame lines or only number of lines containing picture information) is divided into three blocks, and that the first word block of the nth line is written into the first memory area (sp1), the second word block into the second memory area (sp2), and the third word block into the third memory area (sp3) in direct succession;

that each data word of an mth line of the second field (H2) (m=1+N/2, 2+N/2, 3+N/2,..., N) is divided into three sections, and that the first word section of the mth line is written into the second memory area (sp2), the second word section into the third memory area (sp3), and the third word section into the first memory area (sp1) in direct succession;

that during the first half of the duration of a new nth line and a new mth line, the readout interval (r), that data word of the respective mth line and nth line which is delayed by one frame period is read from the frame memory (vs) and compared with the new data word of the nth line and mth line, respectively, in the movement detector (bt), and that during the second half of the duration of this new nth line and mth line, the write-in interval (w), the data word delayed by one frame period is written, together with the movement information, into the memory areas containing the data word delayed by one frame period, and

that for flicker-free picture reproduction by increasing the frame frequency, the first, second, and third word blocks of each data word of the nth line are read out together with the first, second, and third word sections, respectively, of each data word of the adjacent mth line.

3. Television receiver which by increasing the frame frequency, reproduces an interlaced video signal containing fields (H1, H2) flicker-free after analog-to-digital conversion, digital processing, and digital-to-analog conversion, comprising digital memories for the digital video signal (dv), a digital movement detector (bt), and a digital field interpolator (ip) whose output provides the flicker-free digital video signal (fv), the movement detector (bt) controlling the proportional composition of the reproduced frame from the two fields (H1, H2), characterized by the following features:

There is provided a single frame memory (vs) which is divided into a first memory area (sp1) with an associated first bidirectional data bus (db1), a second memory area (sp2) with an associated second bidirectional data bus (db2), and a third memory area (sp3) with an associated third bidirectional data bus (db3), the bidirectional data buses transferring word sections or word blocks in only one direction at a time;

a first multiplexer (mx1), a second multiplexer (mx2), and a third multiplexer (mx3) are connected to each memory area (sp1, sp2, sp3) by each bidirectional data bus (db1, db2, db3);

the first multiplexer (mx1) is also connected to the first input of the field interpolator (ip) by a first unidirectional data bus (eb1), and the second multiplexer (mx2) to the second input of the field interpolator (ip) by a second unidirectional data bus (eb2);

the third multiplexer (mx3) is connected, via a fourth bidirectional data bus (db4) transferring word sections or word blocks in only one direction at a time, to the movement detector (bt), which is also fed with the digital video signal (dv), and

a sequence control circuit (cc) controlled by a clock generator control during a write-in interval (w) and during a readout interval (r), the horizontal-frequency writing (w) into the three memory areas (sp1, sp2, sp3) of the information of a line compressed to one-half line period (=data word) and the single or double readout (r) from said areas at twice the horizontal frequency and at a frame frequency of 50 Hz or 100 Hz, respectively, as well as the movement detector (bt), the three multiplexers (mx1, mx2, mx3), and the field interpolator (ip), such

that each data word of a line of the first field (H1) is divided into four blocks, and that the first word block of an nth line (n=1, 4, 7,..., N/2; N=number of frame lines or only number of lines containing picture information) is written into the first memory area (sp1), the second word block of this line into the second memory area (sp2), the third word block of this line into the third memory area (sp3), the fourth word block of this line into the first memory area (sp1), the first word block of an (n+1)st line (n+1=2, 5, 8,..., N/2) into the second memory area (sp2), the second word block of this line into the third memory area (sp3), the third word block of this line into the first memory area (sp1), the fourth word block of this line into the second memory area (sp2), the first word block of an (n+2)nd line (n+2=3, 6, 9,..., N/2) into the third memory area (sp3), the second word block of this line into the first memory area (sp1), the third word block of this line into the second memory area (sp2), and the fourth word block of this line into the third memory area (sp3) in direct succession;

that each data word of a line of the second field (H2) is divided into four sections, and that the first word section of an mth line (m=1+N/2, 4+N/2, 7+N/2,..., N) is written into the second memory area (sp2), the second word section of this line into the third memory area (sp3), the third word section into the first memory area (sp1), and the fourth word section into the second memory area (sp2), the first word section of an (m+1)st line (m+1=2+N/2, 5+N/2, 8+N/2,..., N) into the third memory area (sp3), the second word section of this line into the first memory area, the third word section into the second memory area (sp2), and the fourth word section into the third memory area (sp3), and the first word section of an (m+2)nd line (m+2=3+N/2, 6+N/2, 9+N/2,..., N) into the first memory area (sp1), the second word section of this line into the second memory area (sp2), the third word section into the third memory area (sp3), and the fourht word section into the first memory area (sp1) in direct succession;

that during the first half of the duration of a new triple sequence of successive lines (n, n+1, n+2; m, m+1, m+2), the readout interval (r), those data words of the triple sequence of the same line number which are delayed by one frame period are read from the frame memory (vs) and compared with the corresponding data words of said new triple sequence in the movement detector (bt), and that during the second half of the duration of said new triple sequence, the write-in interval (w), they are written, together with the movement information, into those memory areas which contain the data words delayed by one frame period, and

that for flicker-free picture reproduction by increasing the frame frequency, the first, second, third and fourth word blocks of each data word of the nth line are read out together with the first, second, third and fourth word sections, respectively, of each data word of the mth line.

13

FIG.1

FIG.2

FIG.3

FIG. 4

a)

b)

c)

d)

B1

A1/A2

A2/B1

B2

A2/B1

B1/B2

FIG. 5

4

FIG. 6

a)
b)
c)
d)

A1/A2

A2/B1

B2

A2/B1

B1/B2

EP 0 180 661 B1